# EUROPEAN PATENT APPLICATION

(11) **EP 4 693 438 A1**
(43) Date of publication of application: **11.02.2026**
(21) Application number: 24890633.1
(22) Date of filing: 11.11.2024
(51) Int. Cl.: H01M 4/13, H01M 50/46, H01M 50/411

(54) **BATTERY, BATTERY PREPARATION METHOD, AND ELECTRIC DEVICE**

(30) Priority: 14.11.2023 CN 202311516264
(71) Applicant: Contemporary Amperex Technology Co., Limited, Ningde, Fujian 352100 (CN)
(72) Inventor: LI, Lei, Ningde, Fujian 352100 (CN); ZHENG, Yi, Ningde, Fujian 352100 (CN); KANG, Haiyang, Ningde, Fujian 352100 (CN); SUN, Chengdong, Ningde, Fujian 352100 (CN); HONG, Haiyi, Ningde, Fujian 352100 (CN); CHENG, Xiaonan, Ningde, Fujian 352100 (CN); MA, Yanyun, Ningde, Fujian 352100 (CN)
(74) Representative: Jacob, Reuben Ellis
(86) International application number: PCT/CN2024/131374
(87) International publication number: WO 2025/103278

(57) **Abstract**

A battery, a battery preparation method, and an electric device. The battery comprises: a negative electrode sheet, the negative electrode sheet comprising a negative electrode current collector and a negative electrode active material layer located on at least one side of the negative electrode current collector, the negative electrode active material layer comprising a binder, and the binder comprising a butadiene copolymer; and a separator, the separator comprising a base membrane and a polymer located on at least one side of the base membrane, the side of the separator provided with the polymer being arranged opposite to the side of the negative electrode sheet provided with the negative electrode active material layer, the polymer comprising a first polymer and a second polymer, the first polymer comprising an acrylate copolymer, and the second polymer comprising a butadiene copolymer.

## Description

### TECHNICAL FIELD

The present disclosure relates to the technical field of battery, and particularly to a battery, a battery preparation method, and an electric device.

### BACKGROUND

In recent years, batteries have been widely applied in energy storage power systems such as hydraulic, thermal, wind, and solar power plants, as well as in various fields of power tools, electric bicycles, electric motorcycles, electric vehicles, military equipment, aerospace, and so on. In a battery, the binder accounts for a relatively small proportion in terms of both usage amount and cost, yet it can effectively improve battery performance and serves as an indispensable key component in batteries. As an inactive material in batteries, the binder is capable of bonding various components within the battery as well as adjacent parts together, thereby reducing the expansion and detachment of active materials during charging and discharging cycles and lowering internal resistance, among other effects. However, current batteries still suffer from insufficient adhesion force and other issues, which require further improvement.

It should be noted that the above statement merely provides the background information related to the present application and do not necessarily constitute the prior art.

### SUMMARY

In a first aspect of the present application, the present application provides a battery including a negative electrode sheet, the negative electrode sheet including a negative electrode current collector and a negative electrode active material layer located on at least one side of the negative electrode current collector, the negative electrode active material layer including a binder, and the binder including a butadiene copolymer; and a separator, the separator including a base membrane and a polymer located on at least one side of the base membrane, the side of the separator provided with the polymer being arranged opposite to the side of the negative electrode sheet provided with the negative electrode active material layer, the polymer including a first polymer and a second polymer, the first polymer including an acrylate copolymer, and the second polymer including a butadiene copolymer. Therefore, the adhesion force between the separator and the negative electrode sheet can be effectively improved, and the structural stability of the battery during the charging and discharging cycle can be improved.

In some implementations, a monomer of the first polymer and a derivative of the monomer of the first polymer include at least a first monomer, and a structure of the first monomer is represented by Formula 1: 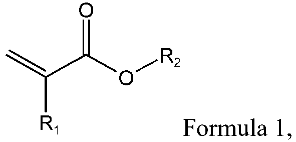 where R₁ includes a hydrogen atom or an alkyl of C₁-C₆, R₂ includes a substituted or unsubstituted alkyl of C₁-C₁₅, a substituted or unsubstituted isobornyl of C₃-C₆, where a substituent of the alkyl of C₁-C₁₅ includes a hydroxyl or the alkyl of C₁-C₆. Thus, this facilitates the formation of the first polymer and improves its anti-swelling capability.

In some implementations, the first monomer includes at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trimethylolpropane triacrylate, 2-hydroxyethyl acrylate, 2-hydroxypropyl acrylate, 2-hydroxyethyl methacrylate, and 2-hydroxypropyl methacrylate. Thus, this can further improve the anti-swelling capability of the first polymer.

In some implementations, the monomer of the first polymer and the derivative of the monomer of the first polymer further include a second monomer, and a structure of the second monomer is represented by Formula 2 and/or Formula 3: 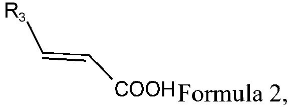 and/or, 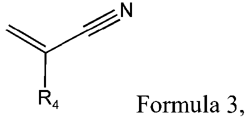 where R₃ includes the hydrogen atom or the alkyl of C₁ -C₁₈, and R₄ includes the hydrogen atom or the alkyl of C₁ -C₆. Thus, this can further improve ion conductivity and adhesion performance of the first polymer.

In some implementations, the second monomer includes at least one of acrylonitrile, methacrylonitrile, ethylacrylonitrile, acrylic acid, methacrylic acid, crotonic acid, and heptenoic acid. Thus, this can further improve the ion conductivity and adhesion performance of the first polymer.

In some implementations, the monomer of the first polymer and the derivative of the monomer of the first polymer further include a third monomer, and a structure of the third monomer is represented by Formula 4: 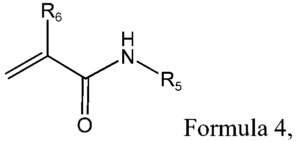 where R₅ includes the hydrogen atom, a hydroxyl substituted alkyl of C₁-C₆ or an alkoxy of C₁-C₆, and R₆ includes the hydrogen atom or the alkyl of C₁-C₆. Thus, this facilitates the formation of the first polymer and adjusts a molecular weight of the first polymer.

In some implementations, the third monomer includes at least one of acrylamide, N-hydroxymethylacrylamide, and N-butoxymethylacrylamide. Therefore, the third monomer can play a role in adjusting the molecular weight of the first polymer, so that the first polymer has better adhesion.

In some implementations, a monomer of the second polymer and a derivative of the monomer of the second polymer include at least a fourth monomer, and a structure of the fourth monomer is represented by Formula 5: 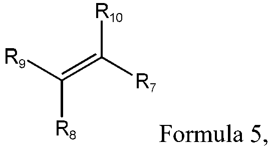 where R₇, R₈, R₉, and R₁₀ each independently include the hydrogen atom, a phenyl, an alkenyl, a cyano, and a linear or branched alkyl. Thus, this can improve alkali resistance and adhesion of the second polymer.

In some implementations, the fourth monomer includes butadiene, and further includes at least one of styrene, acrylonitrile, isoprene, and propylene. Thus, this can further improve the alkali resistance and the adhesion of the second polymer.

In some implementations, the second polymer includes at least one of styrene-butadiene copolymer, acrylonitrile-butadiene copolymer, butadiene-isoprene copolymer, and butadiene-propylene copolymer. Thus, this can further improve the adhesion force between the negative electrode sheet and the separator.

In some implementations, the Dv50 particle size of primary particles of the first polymer is from 100 nm to 200 nm, and/or the Dv50 particle size of primary particles of the second polymer is from 100 nm to 200 nm. Thus, this can further improve the adhesion performance of the first polymer and the second polymer.

In some implementations, the Dv50 particle size of the polymer is from 1 µm to 18 µm. Thus, this can reduce blocking of the base membrane by the polymer.

In some implementations, a mass of the first polymer in the polymer is m₁, a mass of the second polymer in the polymer is m₂, and m₁:m₂ is 100:(1-100). Thus, this can further improve the adhesion of the polymer.

In some implementations, the polymer further includes a tackifying resin, where a mass of the tackifying resin in the polymer is m₃, and m₁:m₃ is 100:(1-15). Thus, this can improve initial adhesion of the polymer.

In some implementations, the tackifying resin satisfies at least one of the following conditions: the tackifying resin includes at least one of rosin resin, terpene resin, and synthetic resin; and the tackifying resin has a number-average molecular weight of 5,000 to 50,000. Thus, this can further improve the initial adhesion of the polymer.

In some implementations, the battery further includes a positive electrode sheet, the separator is located between the positive electrode sheet and the negative electrode sheet, an adhesion force between the separator and the positive electrode sheet is the adhesion force between the separator and the negative electrode sheet is b, and (a:b) ≤ (5:1), preferably, (a:b) ≤ (2:1). Thus, this can improve the structural stability of the battery during the charging and discharging.

In a second aspect of the present application, the present application provides a battery preparation method including mixing an emulsifier, an initiator, and constituent monomers of a first polymer at a mass ratio of (2-10):(0.2-1): 100 under stirring, and heating to react to obtain a first polymer emulsion; mixing the emulsifier, the initiator, and the constituent monomers of a second polymer at the mass ratio of (2-10):(0.2-1): 100 under stirring to obtain a second polymer emulsion; mixing the first polymer emulsion and the second polymer emulsion under stirring, and subjecting the mixture to spray drying to obtain the polymer; disposing the polymer on at least one side of a base membrane to obtain a separator; and arranging the side of the separator provided with the polymer opposite to the side of the negative electrode sheet provided with the negative electrode active material layer. Thus, the above-described battery can be prepared by a simple method.

In some implementations, the constituent monomers of the first polymer include a first monomer, a second monomer, and a third monomer, where the mass ratio of the first monomer, the second monomer, and the third monomer is 100:(1-50):(10-40). Thus, the first polymer having better adhesion can be obtained.

In some implementations, the constituent monomers of the second polymer include a fourth monomer. Thus, the second polymer having better adhesion can be obtained.

In some implementations, the second polymer emulsion satisfies at least one of the following conditions: a solid content of the second polymer emulsion is from 30% to 60%; and the viscosity of the second polymer emulsion at 25°C is from 10 mPa·s to 300 mPa·s. Thus, this contributes to obtaining a polymer having an appropriate particle size by spray drying treatment.

In some implementations, before the spray drying, the method further includes adding the tackifying resin to the spray slurry, where the mass fraction of the tackifying resin in a spray slurry is from 1% to 20%. Thus, the adhesion of the polymer can be improved by the addition of the tackifying resin.

In some implementations, a viscosity of the tackifying resin at 25°C is from 100 mPa·s to 5000 mPa·s. Thus, this can further improve the adhesion of the polymer.

In a third aspect of the present application, the present application provides an electric device including the battery described above, and/or, the battery prepared by the method described above. Therefore, the electric device has all the features and advantages of the battery and the battery preparation method, which will not be repeated here.

### DESCRIPTION OF DRAWINGS

The above and/or additional aspects and advantages of the present application will become apparent and more readily appreciated from the following description of the embodiments taken in conjunction with the accompanying drawings, in which:
FIG. 1 is a schematic structural diagram of a battery cell according to an implementation of the present application;
FIG. 2 is another schematic structural diagram of a battery according to an implementation of the present application;
FIG. 3 is a schematic diagram of a battery cell according to an implementation of the present application;
FIG. 4 is an exploded view of the battery cell shown in FIG. 3 according to an implementation of the present application;
FIG. 5 is a schematic diagram of a battery module according to an implementation of the present application;
FIG. 6 is a schematic diagram of a battery pack according to an implementation of the present application;
FIG. 7 is an exploded view of the battery pack according to an implementation of the present application shown in FIG. 6; and
FIG. 8 is a schematic diagram of an electric device using a battery as a power supply according to an implementation of the present application;
FIG. 9 is a schematic flow diagram of a portion of a method of manufacturing a battery according to an implementation of the present application; and
FIG. 10 is a schematic flow diagram of a method of manufacturing a battery according to an implementation of the present application.

### Description of reference signs:

1-battery pack; 2-upper box body; 3-lower box body; 4-battery module; 5-battery cell;
11-negative electrode current collector; 12-negative electrode active material layer; 21-positive electrode current collector; 22-positive electrode active material layer; 31-base membrane; 32-polymer; 51-housing; 52-electrode assembly; 53-top cover assembly.

### DESCRIPTION OF EMBODIMENTS

The embodiments of the present application will be described in detail below. The examples of the embodiments are shown in the accompanying drawings, in which the same or similar reference numerals denote the same or similar elements or elements with the same or similar functions throughout. The embodiments described below with reference to the drawings are exemplary and are merely to explain the present application, and should not be construed as limiting the present application.

Unless otherwise defined, all technical and scientific terms used in the present application have the same meanings as commonly understood by those skilled in the technical field to which the present application belongs; the terminology used herein is for the purpose of describing particular embodiments only and is not intended to limit the application; unless otherwise specified, numerical values of parameters mentioned in the present application may be measured by various methods commonly used in the field (for example, they may be tested according to the methods given in the embodiments of the present application).

In the specification and claims of the present application, the terms "include", "include", "have" and any variations thereof are to be construed as open-ended terms, meaning that they include the elements recited, but do not exclude other elements.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions.

Unless otherwise specified, all technical features and optional technical features of this application can be combined with each other to form new technical solutions.

In describing the present application, the terms "first" and "second" are only used for descriptive purposes, and should not be construed as indicating or implying relative importance or implicitly indicating the number of technical features indicated. The terms "first feature" and "second feature" may include one or more of such features.

In the description of the present application, "A and/or B" shall be construed to include any of the following cases: A alone, B alone, or both A and B, where A and B are merely exemplary and may represent any technical features connected by "and/or" in the present application.

In the description of the present application, "chemically identical" shall be interpreted broadly to mean that the main components of both have identical chemical composition; or the chemical compositions are substantially identical, which may include variations or impurities within ranges that would be understood by those skilled in the art as being technically permissible.

Generally, the battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct active ions between the positive electrode sheet and the negative electrode sheet. The separator is disposed between the positive electrode sheet and the negative electrode sheet, to mainly prevent positive and negative electrodes of the battery from being short-circuited and allow ions to pass through.

A binder needs to be disposed between the separator and the electrode sheet to tightly bond adjacent parts together, and because the positive and negative electrode sheets and the separator that are bonded together are attached to each other and support each other, a structure with a certain thickness is formed, and the structure with a certain thickness has a certain hardness. The negative electrode sheet will expand during the charging and discharging, and if the adhesion force is weak, gaps will be formed among the positive electrode sheet, the negative electrode sheet and the separator, and the positive electrode sheet, the negative electrode sheet and the separator cannot be attached to each other and support each other, resulting in the battery being loose, the hardness becoming lower, the internal resistance of the battery being significantly increased, and the wettability of the electrode sheet to the electrolyte being poor, which in turn results in cycle performance of the battery being significantly reduced. The adhesion performance between the separator and the negative electrode sheet is usually weaker than the adhesion performance between the separator and the positive electrode sheet. Specifically, the surface smoothness of the negative electrode active material is higher than that of the positive electrode active material, so that the binder added in the negative electrode active material layer cannot produce a relatively firm adhesion force with the negative electrode active material in the negative electrode active material layer; meanwhile, the negative electrode active material in the negative electrode active material layer usually has a relatively high packing density, so that the gap between the negative electrode active material particles is too small, which is not conducive to the binder in the negative electrode active material layer entering between the negative electrode active material particles to realize wettability of the negative electrode active material, and the mechanical riveting effect of the binder is poor. Furthermore, due to the relatively low number of active functional groups on the surface of the negative electrode active material, the intermolecular interaction forces between the negative electrode active material and the binder are also weak, ultimately resulting in poor adhesion of the negative electrode active material layer and poor adhesion performance between the negative electrode sheet and the separator. Therefore, by improving the adhesion performance between the separator and the negative electrode sheet, the poor adhesion between the negative electrode sheet and the separator can be effectively alleviated, thereby improving the wettability of the electrode sheet to the electrolyte and improving the cycle performance of the battery.

The binder in the negative electrode slurry is in a uniformly dispersed state, and after the negative electrode slurry coated on one side of the negative electrode current collector is dried, in the negative electrode active material layer formed by the negative electrode slurry, a part of the binder moves from a side close to the negative electrode current collector to a side away from the negative electrode current collector, so that there is more binder on a surface of the side, away from the negative electrode current collector, of the dried negative electrode active material layer, and when the side of the separator provided with the polymer is disposed opposite to the side of the negative electrode sheet provided with the negative electrode active material layer, the polymer on the separator has a strong interaction force with the binder in the negative electrode active material layer. In the present application, by disposing the first polymer and the second polymer on the surface of the base membrane, the first polymer is an acrylate copolymer, and the second polymer includes a butadiene copolymer, the first polymer can effectively improve the adhesion force, mechanical stability and chemical stability of the separator, and the second polymer can improve the adhesion force between the polymer and the butadiene copolymer in the negative electrode active material layer, further improve the adhesion performance between the separator and the negative electrode sheet, alleviate the poor adhesion between the separator and the negative electrode sheet, inhibit the volume expansion of the negative electrode sheet during the lithium deintercalation and intercalation process, improve the structural stability of the battery during the charging and discharging cycle process, and effectively improve the cycle performance of the battery.

The binder refers to a material having the adhesion performance, and is used to bond different substances together.

Copolymers are polymers formed by polymerization of two or more monomers together, known as copolymerization, to form a polymer containing two or more monomer units, such polymers being referred to as copolymers, also known as interpolymers.

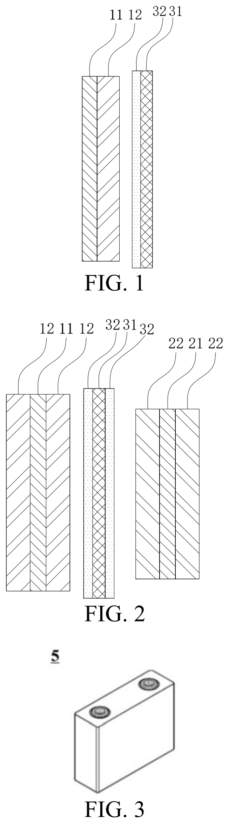

In a first aspect of the present application, with reference to FIG. 1, the present application provides a battery including a negative electrode sheet, the negative electrode sheet including a negative electrode current collector 11 and a negative electrode active material layer 12 located on at least one side of the negative electrode current collector, the negative electrode active material layer 12 including a binder, and the binder including a butadiene copolymer; and a separator, the separator including a base membrane 31 and a polymer 32 located on at least one side of the base membrane, the side of the separator provided with the polymer 32 being arranged opposite to the side of the negative electrode sheet provided with the negative electrode active material layer 12, the polymer including a first polymer and a second polymer, the first polymer including an acrylate copolymer, and the second polymer including a butadiene copolymer. Through cooperative use of the first polymer and the second polymer, the adhesion force of the polymer itself, for example, the adhesion between the polymer and the base membrane, can be improved, and the adhesion performance between the separator and the negative electrode sheet can also be improved.

The butadiene copolymer has the characteristics of strong alkali resistance, soft film-forming, good air permeability, strong adhesion force and the like, and has good mechanical stability and chemical stability when used as a binder in the negative electrode active material layer.

As an example, the butadiene copolymer binder in the negative electrode active material layer may include styrene-butadiene rubber (SBR), and further, the negative electrode active material layer may further include other binders, such as at least one of polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some implementations, the base membrane may include at least one of polyethylene, polypropylene, polyvinylidene fluoride, polytetrafluoroethylene, and non-woven fabric.

By using the base membrane made of the above material, the adhesion of the polymer on the base membrane can be effectively improved, and the structural stability of the separator can be improved.

In some implementations, the mass of the first polymer in the polymer is m₁, the mass of the second polymer in the polymer is m₂, and m₁:m₂ is 100:(1-100).

As an example, m₁:m₂ may be 100:1, 100:5, 100:10, 100:15, 100:20, 100:25, 100:30, 100:35, 100:40, 100:45, 100:50, 100:55, 100:60, 100:65, 100:70, 100:75, 100:80, 100:85, 100:90, 100:95, or 100:100.

The polymer on the surface of the separator is a secondary particle formed by agglomeration of the primary particle of the first polymer and the primary particle of the second polymer, and both the primary particle of the first polymer and the primary particle of the second polymer have a chance to be exposed on the surface of the secondary particle. When a mass ratio of the first polymer to the second polymer in the polymer is within the foregoing range, the amounts of the first polymer and the second polymer exposed on the surface of the secondary particle can be regulated, an appropriate amount of the first polymer exposed on the surface of the secondary particle can improve the adhesion of the polymer on the surface of the separator, and an appropriate amount of the second polymer exposed on the surface of the secondary particle can be combined with the butadiene copolymer in the negative electrode active material layer to improve the adhesion force between the separator and the negative electrode sheet.

In some implementations, a monomer of the first polymer and a derivative of the monomer of the first polymer include at least a first monomer, and a structure of the first monomer is represented by Formula 1: 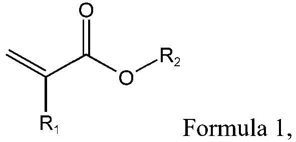 where R₁ includes a hydrogen atom or an alkyl of C₁-C₆, R₂ includes a substituted or unsubstituted alkyl of C₁-C₁₅, a substituted or unsubstituted isobornyl of C₃-C₆, where a substituent of the alkyl of C₁-C₁₅ includes a hydroxyl or the alkyl of C₁-C₆.

In the manufacturing process of the battery, the separator and the electrode sheet can be tightly bonded by a hot pressing process or a cold pressing process. The first monomer includes an unsaturated ester group, which is beneficial to the polymerization of the monomer, and the soft and hard monomers in the ester monomer can form a backbone of the first polymer molecular chain segment through polymerization, so that the first polymer has excellent stability and better adhesion, which contributes to improving the anti-swelling performance of the first polymer.

The swelling of the polymer will cause problems such as increased volume expansion and electrode pulverization during the charging and discharging of the battery, which further causes the increase of the alternating current impedance of the electrode, the acceleration of reversible capacity attenuation, and the deterioration of cycle stability.

In some implementations, the first monomer includes at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trimethylolpropane triacrylate, 2-hydroxyethyl acrylate, 2-hydroxypropyl acrylate, 2-hydroxyethyl methacrylate, and 2-hydroxypropyl methacrylate.

The adhesion performance and anti-swelling performance of the first polymer can be adjusted by using any one or more of the first monomers described above.

In some implementations, the monomer of the first polymer and the derivative of the monomer of the first polymer further include a second monomer, and a structure of the second monomer is represented by Formula 2 and/or Formula 3: 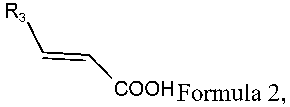 and/or, 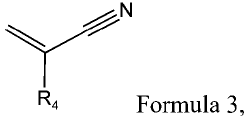 where R₃ includes the hydrogen atom or the alkyl of C₁ -C₁₈, and R₄ includes the hydrogen atom or the alkyl of C₁ -C₆.

The second monomer contains an unsaturated double bond, which is beneficial to the polymerization of the monomer, and also has a carboxyl group and/or a cyano functional group, and the carboxyl group and the cyano group can not only form an adhesion force with the functional group on the base membrane to improve the adhesion performance between the first polymer and the base membrane, but also increase the crosslinking active site of the first polymer, thereby improving the resistance and cohesive strength of the first polymer.

In some implementations, the second monomer includes at least one of acrylonitrile, methacrylonitrile, ethylacrylonitrile, acrylic acid, methacrylic acid, crotonic acid, and heptenoic acid.

The use of any one or more of the second monomers described above can adjust the adhesion performance of the first polymer, where the monomer containing a cyano group can also improve the ion conductivity of the first polymer.

In some implementations, the monomer of the first polymer and the derivative of the monomer of the first polymer further include a third monomer, and a structure of the third monomer is represented by Formula 4: 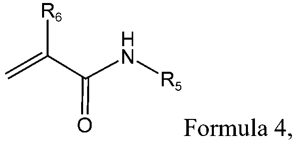 where R₅ includes the hydrogen atom, a hydroxyl substituted alkyl of C₁-C₆ or an alkoxy of C₁-C₆, and R₆ includes the hydrogen atom or the alkyl of C₁-C₆.

The structure of the third monomer includes an unsaturated amide group, which is beneficial to the polymerization of the monomer, and this type of monomer plays a role in adjusting the molecular weight, and also has better adhesion and anti-swelling properties.

In some implementations, the third monomer includes at least one of acrylamide, N-hydroxymethylacrylamide, and N-butoxymethylacrylamide.

Any one or more of the above third monomers can be used to adjust the molecular weight of the polymer, and the molecular weight of the first polymer within a certain range helps to improve the adhesion.

Testing of ester, carboxyl, acrylamide, carbonyl, amide, and cyano groups in organic polymer structures: the testing shall be conducted according to the National Standard GB/T 6040-2002 "General Principles of Infrared Spectroscopic Analysis Methods". Using the pressed pellet transmission method, the sample is mixed with KBr and pressed into a pellet. The background interference from KBr is eliminated via the transmission method to obtain the sample test spectrum (resolution: 4cm⁻¹, wavenumber range: 400cm⁻¹-4000cm⁻¹).

In some implementations, a monomer of the second polymer and a derivative of the monomer of the second polymer include at least a fourth monomer, and a structure of the fourth monomer is represented by Formula 5: 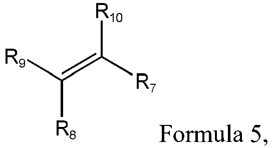 where R₇, R₈, R₉, and R₁₀ each independently include the hydrogen atom, a phenyl, an alkenyl, a cyano, and a linear or branched alkyl.

The structure of the fourth monomer includes an unsaturated double bond, which is beneficial to the polymerization of the monomer and improves the strong alkali resistance and the adhesion force of the second polymer.

In some implementations, the fourth monomer includes butadiene, and further includes at least one of styrene, acrylonitrile, isoprene, and propylene.

With any one or more of the fourth monomers described above, the alkali resistance and the adhesion of the second polymer can be improved.

In some implementations, the second polymer includes at least one of styrene-butadiene copolymer, acrylonitrile-butadiene copolymer, butadiene-isoprene copolymer, and butadiene-propylene copolymer.

The use of at least one butadiene copolymer can effectively improve the adhesion performance between the separator and the negative electrode sheet.

In some implementations, the binder in the negative electrode active material layer may have the same chemical composition as the second polymer.

In some implementations, the Dv50 particle size of primary particles of the first polymer is from 100 nm to 200 nm, and/or the Dv50 particle size of primary particles of the second polymer is from 100 nm to 200 nm.

As an example, the Dv50 particle size of the primary particle of the first polymer may be 100 nm, 105 nm, 110 nm, 115 nm, 120 nm, 125 nm, 130 nm, 135 nm, 140 nm, 145 nm, 150 nm, 155 nm, 160 nm, 165 nm, 170 nm, 175 nm, 180 nm, 185 nm, 190 nm, 195 nm, or 200 nm.

As an example, the Dv50 particle size of the primary particle of the second polymer may be 100 nm, 105 nm, 110 nm, 115 nm, 120 nm, 125 nm, 130 nm, 135 nm, 140 nm, 145 nm, 150 nm, 155 nm, 160 nm, 165 nm, 170 nm, 175 nm, 180 nm, 185 nm, 190 nm, 195 nm, or 200 nm.

The particle size of the polymer beads in the emulsion polymer is usually in nanometer scale, if the polymer beads are directly scraped onto the base membrane, the situation such as hole blocking or insufficient adhesion force will occur due to the too small particle size of the polymer beads, and when the polymer material is synthesized by emulsion polymerization, the polymer material in the form of particles can be obtained by granulation treatment, which contributes to obtaining a polymer with a particle size in micrometer scale.

In some implementations, the Dv50 particle size of the polymer is from 1 µm to 18 µm.

As an example, the Dv50 particle size of the polymer may be 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, and 18 µm.

The polymer particles are secondary particles formed by agglomeration of primary particles of the first polymer and primary particles of the second polymer, so that the first polymer serves as a backbone therein to provide the polymer with high adhesion force and structural stability, and the second polymer forms an adhesion force with the functional group of the binder in the negative electrode active material layer to improve the bonding effect between the separator and the negative electrode sheet.

It can be understood that the polymer latex of the first polymer and the second polymer is mixed and then spray dried to obtain polymer particles, where the primary particles of the first polymer and the second polymer are mixed together to form the spray dried polymer secondary particles.

When the Dv50 particle size of the polymer is within the foregoing range, not only the problem that the polymer blocks the pores of the base membrane can be alleviated, and the permeability of the metal active ions on the separator can be improved, but also the problem that the energy density of the battery is affected due to the relatively thick coating formed by coating the polymer on the base membrane can be alleviated.

The Dv50 particle size indicates that in a sample particle population, 50% of the total particle volume consists of particles larger than this value, while the remaining 50% includes particles smaller than this value; Dv50 may represent the median particle size of the sample.

The volume particle size distribution Dv50 of the polymer can be measured by methods known in the art. As an example, reference may be made to GB/T 19077-2016, with characterization testing conducted using a Malvern laser particle size analyzer, such as instruments like a Malvern Mastersizer-3000.

In some implementations, the primary particles of the polymer can be obtained by emulsion polymerization, the secondary particles of the polymer can be obtained by spray drying the primary particles of the polymer in the polymer emulsion, and the Dv50 particle size of the secondary particles of the polymer can be measured by a laser particle size analyzer after the primary particles of the polymer in the polymer emulsion are cleaned to remove impurities.

In some implementations, the polymer may further include a tackifying resin, where a mass of the tackifying resin in the polymer is m₃, and m1:m3 is 100:(1-15).

As an example, m₁:m₃ may be 100: 1, 100: 5, 100: 7, 100: 9, 100: 10, 100: 12, or 100: 15.

When two polymer materials are in contact with each other, a variety of interaction forces including strong interaction forces such as chemical bonds and weak forces such as hydrogen bonds and dispersion forces may be generated between atoms and molecules in adjacent polymers. For polymers, the viscous effect is influenced by dispersion forces, self polarity and hydrogen bonding. When m₁:m₃ falls within the foregoing range, the tackifying resin undergoes mutual chain diffusion and chain entanglement with both the first polymer and the second polymer upon contact. Through this diffusion and entanglement mechanism, the tackifying resin becomes surface-bonded with the first and second polymers. The polymer chain segments exhibit high mobility, and since the initial tackiness of polymers strongly correlates with chain segment mobility, the polymers can rapidly wet contacted surfaces under minimal external pressure, achieving molecular-level contact. Consequently, numerous intermolecular interaction forces generate sufficient adhesive strength, resulting in significantly enhanced overall adhesion of the polymers.

In some implementations, the tackifying resin satisfies at least one of the following conditions: the tackifying resin includes at least one of rosin resin, terpene resin, and synthetic resin; and the tackifying resin has a number-average molecular weight of 5,000 to 50,000.

As an example, the rosin resin may include at least one of gum rosin, tall oil rosin, wood rosin, hydrogenated rosin, disproportionated rosin, polymerized rosin, esterified rosin, and maleated rosin; the terpene resin may include at least one of α-pinene resin, β-pinene resin, and terpene-phenolic resin; the synthetic resin may include at least one of C₅ petroleum resin, C₉ petroleum resin, C₅/C₉ copolymer petroleum resin, dicyclopentadiene resin, alkylphenolic resin, and xylene resin.

As an example, the number-average molecular weight of the tackifying resins may be 5000, 6000, 7000, 8000, 9000, 10000, 12000, 15000, 18000, 20000, 22000, 25000, 28000, 30000, 32000, 35000, 38000, 40000, 42000, 45000, 48000, or 50000.

The chain diffusion and chain entanglement of the polymer material are related to its number-average molecular weight, and when the number-average molecular weight of the tackifying resin is within the foregoing range, the number-average molecular weight of the tackifying resin is moderate, which facilitates the diffusion and entanglement of the segments, and the strength after entanglement is high.

In some implementations, the battery may further include a positive electrode sheet, the separator is located between the positive electrode sheet and the negative electrode sheet, an adhesion force between the separator and the positive electrode sheet is a, an adhesion force between the separator and the negative electrode sheet is b, and (a:b) ≤ (5:1).

As an example, (a: b) may be 5: 1, 4: 1, 3: 1, 2: 1, or 1: 1.

When (a:b) is within the foregoing range, the adhesion force between the separator and the positive electrode sheet and the adhesion force between the separator and the negative electrode sheet are both relatively high, which can effectively inhibit the expansion of the negative electrode sheet during the charging and discharging, and the positive electrode sheet, the negative electrode sheet and the separator are attached to each other and support each other, which contributes to the battery maintain structural stability, so that the electrode sheet has better wettability to the electrolyte, and the cycle performance of the battery is better.

The adhesion force between the separator and the electrode sheet can be tested by a method well known in the art. As an example, the electrode sheet and the separator may be overlapped together and placed on a hot press machine, the hot press machine is set to have parameters of a temperature of 25°C, a pressure of 7 t, and a time of 15 s, and the separator/electrode sheet sample bonded is obtained by pressing, and the separator/electrode sheet sample is cut into a rectangular strip of 150 mm × 20 mm. The rectangular strip is adhered to a steel plate via double-sided tape with the electrode sheet side facing outward. A 2 cm length of the separator is peeled away from the electrode sheet along the longitudinal direction at one end of the rectangular strip to prepare the test sample. The steel plate is maintained horizontally and secured by the lower fixture of a universal testing machine (Xieqiang Instrument Manufacturing (Shanghai) Co., Ltd., Model CTM2100). The peeled end of the above-mentioned separator is clamped by the upper fixture of the universal testing machine and connected to the tensile tester. The test is performed at a tensile speed of 20 mm/min with a horizontal pulling distance of 10 cm. After the tensile force stabilizes, the force value is recorded. The adhesion force between the separator and the electrode sheet is obtained by dividing the tensile force value by the sample width.

### [Positive electrode sheet]

As an example, with reference to FIG. 2, the positive electrode current collector has two surfaces opposite to each other in its own thickness direction, and the positive electrode active material layer 22 is disposed on either one or both of the two opposite surfaces of the positive electrode current collector 21.

In some implementations, the positive electrode current collector may use a metal foil or a composite current collector. For example, an aluminum foil can be used as the metal foil. The composite current collector may include a polymer material base layer and a metal layer formed on at least one side surface of a polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, when the battery is a lithium-ion battery, the positive pole active material may be the positive pole active materials well-known in the art for lithium-ion batteries.

As an example, the positive pole active material may include at least one of olivine-structured lithium-containing phosphate, lithium-transition metal oxide, and their respective modifying compounds. However, the present application is not limited to these materials, and another conventional material that can be used as a positive pole active material of a battery may also be used. These positive pole active materials may be used alone or in combination of two or more thereof. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.8}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. The modified compounds of each material may be a compound of the material subjected to doping modification and/or surface coating modification.

Deintercalation and consumption of Li occur during charging and discharging of the battery, and the molar content of Li varies when the battery is discharged to different states. In the enumeration of the positive electrode active material in the present application, the molar content of Li is an initial state of the material, i.e., a state before adding. The positive electrode active material is applied to a battery system, and the molar content of Li changes after charging and discharging cycles.

In some implementations, when the battery cell is a sodium-ion battery, the positive pole active material may be the positive pole active materials well-known in the art for sodium-ion batteries.

As an example, the positive electrode active material may include at least one of the following materials: sodium transition metal oxides, polyanionic compounds, Prussian blue analogues sodium compounds, and their respective modified compounds. However, the present application is not limited to these materials, and another conventional material that can be used as a positive pole active material of a battery may also be used. The modified compounds of each material may be a compound of the material subjected to doping modification and/or surface coating modification.

In some implementations, the transition metal in the sodium transition metal oxide may be at least one of Ti, V, Mn, Co, Ni, Fe, Zn, V, Zr, Ce, Cr, and Cu. The chemical formula of sodium transition metal oxides can be expressed as NaₓMO₂, where M includes at least one of Ti, V, Mn, Co, Ni, Fe, Zn, V, Zr, Ce, Cr, and Cu, with 0 < x ≤ 1.

In some implementations, the polyanionic compound may alternatively be a compound having a sodium ion, a transition metal ion, and a tetrahedral (YO₄)ⁿ⁻ anionic unit. The transition metal may include at least one of Mn, Fe, Ni, Co, Cr, Cu, Ti, Zn, V, Zr, and Ce; Y may include at least one of P, S, and Si; and n represents the valence state of (YO₄)ⁿ⁻.

In some implementations, the polyanionic compound may alternatively be a compound having a sodium ion, a transition metal ion, a tetrahedral (YO₄)ⁿ⁻ anion unit, and a halogen anion. The transition metal may include at least one of Mn, Fe, Ni, Co, Cr, Cu, Ti, Zn, V, Zr, and Ce; Y may include at least one of P, S, and Si; n represents the valence state of (YO₄)ⁿ⁻; and the halogen may include at least one of F, Cl, and Br.

In some implementations, the polyanionic compound may alternatively be a compound having a sodium ion, a tetrahedral (YO4)ⁿ⁻ anion unit, a polyhedral unit (ZO_{y})^{m+}, and an optional halogen anion. M includes at least one of Mn, Fe, Ni, Co, Cr, Cu, Ti, Zn, V, Zr, and Ce; Y includes at least one of P, S, and Si; n represents the valence state of (YO₄)ⁿ⁻; Z represents a transition metal; m represents the valence state of (ZOy)^{m+}; and the halogen includes at least one of F, Cl, and Br.

As an example, the polyanionic compound may satisfy at least one of the following chemical formulas: NaFePO₄, Na₃V₂(PO₄)₃ (sodium vanadium phosphate, abbreviated NVP), Na₄Fe₃(PO₄)₂(P₂O₇), NaM'PO₄F (where M' includes at least one of V, Fe, Mn, and Ni) and Na₃(VOy)₂(PO₄)₂F₃₋₂y (0≤y≤1).

In some implementations, the Prussian blue compound may be a compound having a sodium ion, a transition metal ion, and a cyanide ion (CN⁻). The transition metal may include at least one of Mn, Fe, Ni, Co, Cr, Cu, Ti, Zn, V, Zr, and Ce.

As an example, the Prussian blue analogue compound may satisfy the chemical formula NaₐMe_{b}Me'_{c}(CN)₆, where: Me and Me' each independently include at least one of Ni, Cu, Fe, Mn, Co, and Zn; 0 < a ≤ 2; 0 < b < 1; and 0 < c < 1.

Deintercalation and consumption of Na occur during the charging and discharging of the battery, and the molar content of Na varies when the battery is discharged to different states. In the enumeration of the positive electrode active material in the present application, the molar content of Na is an initial state of the material, i.e., a state before adding. The positive electrode active material is applied to a battery system, and the molar content of Na changes after charging and discharging cycles.

In the enumeration of the positive electrode active material in the present application, the molar content of O is only a theoretical state value, the molar content of oxygen changes due to the release of oxygen from a lattice, and the actual molar content of O fluctuates.

In some implementations, the active material layer optionally further includes a binder.

As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode active material layer further optionally includes a conductive agent.

As an example, the conductive agent may include at least one of superconducting carbon, acetylene black, carbon black, ketjen black, carbon dots, carbon nanotubes, graphene, and carbon nanofibers.

In some implementations, the positive electrode sheet may be prepared by dispersing the above components for preparing a positive electrode sheet, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

### [Negative electrode sheet]

The negative electrode sheet includes a negative electrode current collector and a negative electrode active material layer that is disposed on at least one side surface of the negative electrode current collector, the negative electrode active material layer including a negative electrode active material.

As an example, the negative electrode current collector has two surfaces opposite in its own thickness direction, and the negative electrode active material layer is provided on either one or both of the two opposite surfaces of the negative electrode current collector.

In some implementations, the negative electrode current collector may employ a metal foil or composite current collector. For example, a copper foil may be used as the metal foil. The composite current collector may include a polymer material base layer and a metal layer formed on at least one side surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative pole active material may be a negative pole active material well-known in the art for batteries. As an example, the negative electrode active material may include at least one of the following materials: synthetic graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material includes at least one of elemental tin, a tin-oxygen compound, and a tin alloy. However, the present application is not limited to these materials, and another conventional material that can be used as a negative electrode active material of a battery may also be used. These negative pole active materials may be used alone or in combination of two or more thereof.

In some implementations, the negative electrode active material layer further optionally includes a conductive agent. The conductive agent includes at least one of superconducting carbon, acetylene black, carbon black, ketjen black, carbon dot, carbon nanotube, graphene, and carbon nanofiber.

In some implementations, the negative electrode active material layer further optionally includes another auxiliary agent, for example, a thickening agent (e.g., sodium carboxymethyl cellulose (CMC-Na)).

In some implementations, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

### [Electrolyte]

The electrolyte functions to conduct ions between the positive electrode sheet and the negative electrode sheet. The type of the electrolyte is not specifically limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some implementations, the electrolyte salt includes at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte optionally further includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

In some embodiments, the positive electrode sheet, the negative electrode sheet, and the separator may be manufactured into the electrode assembly through a winding process or a lamination process.

In some implementations, the battery may include an outer package. The outer package may be used to package the foregoing electrode assembly and electrolyte.

In some implementations, the outer package of the battery may be a hard casing, for example, a hard plastic casing, an aluminum casing, or a steel casing. The outer package of the battery may also be a pouch, such as a bag-type pouch. The material of the pouch may be plastic, and examples of the plastic include polypropylene, polybutylene terephthalate, and polybutylene succinate.

The shape of the battery is not particularly limited in the present application, and may be a cylindrical shape, a square shape, or any other shape. For example, FIG. 3 shows a battery cell 5 with a square structure as an example.

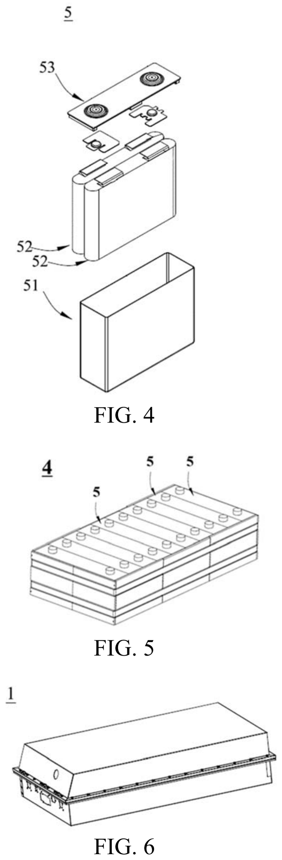

In some implementations, with reference to FIG. 4, the outer package may include a housing 51 and a top cover assembly 53. The housing 51 may include a bottom plate and side plates connected to the bottom plate, and the bottom plate and the side plates define an accommodating chamber. The housing 51 has an opening communicating with the accommodating chamber, and the top cover assembly 53 can cover on the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the battery cell 5, and those skilled in the art may perform selection according to specific actual requirements.

In some implementations, the battery may be assembled into a battery module, there may be one or a plurality of batteries included in the battery module, and those skilled in the art may make a selection based on the application and capacity of the battery module.

FIG. 5 shows a battery module 4 as an example. Referring to FIG. 5, in the battery module 4, a plurality of battery cells 5 may be arranged sequentially in the length direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some embodiments, the battery modules may be further assembled into a battery pack, and there may be one or a plurality of battery modules included in the battery pack, and the specific number may be selected by those skilled in the art according to the application and capacity of the battery pack.

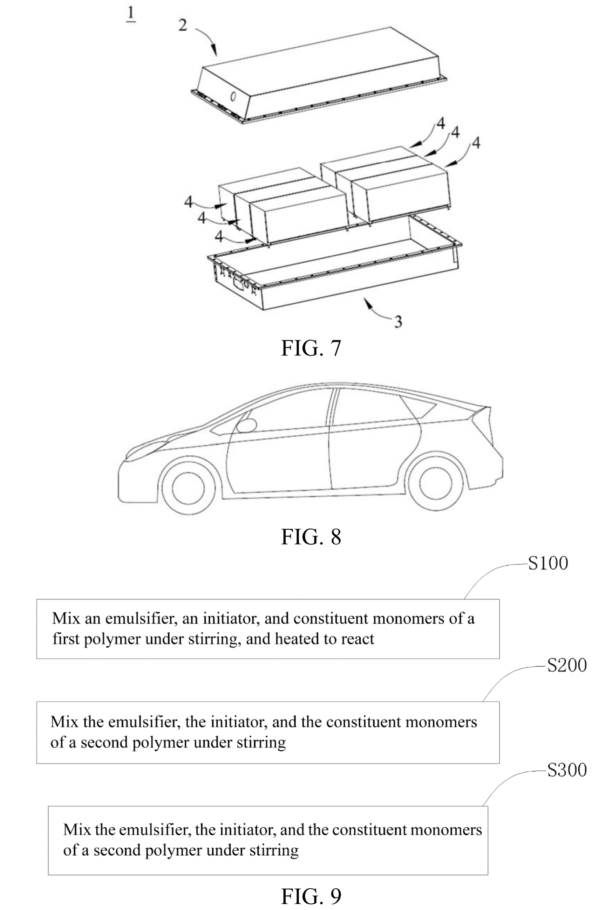

FIG. 6 and FIG. 7 show a battery pack 1 as an example. With reference to FIG. 6 and FIG. 7, a battery case and a plurality of battery modules 4 disposed in the battery case may be included in the battery pack 1. The battery case includes an upper box body 2 and a lower box body 3, the upper box body 2 being capable of covering the lower box body 3 and forming a closed space for accommodating the battery modules 4. The plurality of battery modules 4 may be arranged in any manner in the battery case.

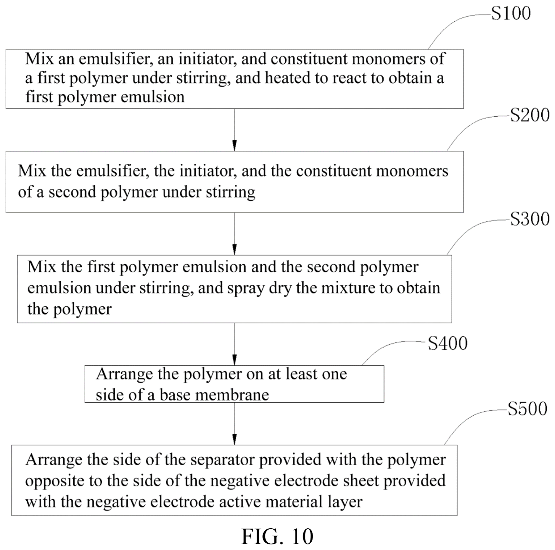

In a second aspect of the present application, the present application provides a method for preparing the foregoing battery, with reference to FIGS. 9 and 10, including:

S100: an emulsifier, an initiator, and constituent monomers of a first polymer are mixed under stirring, and heated to react.

In some implementations, an emulsifier, an initiator, and constituent monomers of a first polymer are mixed at a mass ratio of (2-10):(0.2-1):100 under stirring, heated to react and subjected to emulsion polymerization to obtain a first polymer emulsion, and the yield of the first polymer can be increased.

Emulsion polymerization refers to a process where monomers are dispersed in water to form an emulsion with the aid of emulsifiers and mechanical agitation, followed by the addition of initiators to induce monomer polymerization.

Emulsifiers are substances capable of transforming mutually incompatible oil and water into a stable, non-separating emulsion. Typically, emulsifiers are surfactants possessing both hydrophilic polar groups and hydrophobic (lipophilic) nonpolar groups.

Initiators are compounds capable of initiating monomer polymerization reactions. For example, free radical initiators refer to a class of compounds that readily undergo thermal decomposition to generate free radicals (i.e., primary radicals). These initiators may be used to initiate free radical polymerization and copolymerization reactions of vinyl and diene monomers.

In some implementations, the emulsifier may include at least one of sodium dodecyl sulfonate, sodium dodecylbenzene sulfonate, sodium lauryl sulfate, sodium dodecylbenzene sulfate, sodium laurate, sodium stearate, and sodium palmitate.

In some implementations, the initiator may include at least one of: persulfate initiators, including at least one of potassium persulfate and ammonium persulfate; acyl peroxide initiators, including at least one of benzoyl peroxide and dioctanoyl peroxide; azo initiators, including at least one of azobisisobutyronitrile and dimethyl azobisisobutyrate.

In some implementations, the constituent monomers of the first polymer may include the aforementioned first monomer, second monomer, and third monomer, where the mass ratio of the first monomer, second monomer, and third monomer may be 100:(1-50):(10-40). Thus, while combining the respective advantages of the first, second, and third monomers, the first polymer also exhibits better adhesion.

S200: the emulsifier, the initiator, and the constituent monomers of a second polymer are mixed under stirring.

In some implementations, an emulsifier, an initiator, and constituent monomers of a second polymer are mixed at a mass ratio of (2-10):(0.2-1):100 under stirring, and subjected to emulsion polymerization to obtain a second polymer emulsion, and the yield of the second polymer can be increased.

In some implementations, the constituent monomers of the second polymer include a fourth monomer.

In some implementations, the second polymer emulsion satisfies at least one of the following conditions: a solid content of the second polymer emulsion is from 30% to 60%; and the viscosity of the second polymer emulsion at 25°C is from 10 mPa·s to 300 mPa·s.

In some implementations, the emulsifier may include at least one of sodium fatty acid and disproportionated sodium rosinate.

In some implementations, the initiator may include at least one of p-menthane hydroperoxide, pinane hydroperoxide, and dicumyl peroxide.

In some implementations, the emulsifier and initiator used in the preparation of the second polymer emulsion may refer to the substances used in the preparation of the first polymer emulsion, and will not be repeated here.

When the viscosity and the solid content of the second polymer emulsion are within the foregoing ranges, the ejection of the polymer emulsion in the granulation treatment is facilitated, so that the effect of the granulation treatment can be improved.

As an example, the viscosity of the polymer emulsion can be measured using a rotary Brookfield viscometer. Specifically, it can be measured at 25°C with a No. 62 rotor.

S300: the first polymer emulsion and the second polymer emulsion are mixed under stirring, and the mixture is spray dried to obtain the polymer.

In some implementations, after the first polymer emulsion and the second polymer emulsion prepared in the above are mixed in this step, polymer particles with a moderate particle size are obtained by granulation through a spray drying treatment.

When the polymer material is synthesized by emulsion polymerization, the particle size of the polymer beads in the emulsion polymer is usually in the nanometer scale, and if the polymer material is directly scraped onto the base membrane, the polymer material may be blocked or have insufficient adhesion force due to the too small particle size of the polymer beads, and the polymer material composed of the first polymer and the second polymer is obtained by granulation treatment, such as spray drying treatment.

In spray drying, the material to be dried (the mixture of the first polymer emulsion and the second polymer emulsion) is dispersed into very fine mist-like particles by mechanical action (increasing the moisture evaporation area and accelerating the drying process), and most of the moisture is removed at the moment of contact with hot air, so that the solid substance in the material is dried into powder.

In some implementations, before the spray drying, the method further includes adding the tackifying resin to the spray slurry, where the mass fraction of the tackifying resin in a spray slurry is from 1% to 20%.

As an example, the mass fraction of the tackifying resin in the spray slurry may be 1%, 2%, 3%, 4%, 5%, 6%, 7%, 8%, 9%, 10%, 11%, 12%, 13%, 14%, 15%, 16%, 17%, 18%, 19%, or 20%.

In some implementations, a viscosity of the tackifying resin at 25°C is from 100 mPa·s to 5000 mPa·s.

S400: the polymer is arranged on at least one side of a base membrane.

In some implementations, the polymer may be dissolved in a solvent to prepare a slurry, and then the slurry is sprayed onto at least one side surface of the base membrane, and the solvent is removed by drying to obtain the separator.

In some implementations, the polymer may be arranged on opposing side surfaces of the base membrane.

S500: the side of the separator provided with the polymer is arranged opposite to the side of the negative electrode sheet provided with the negative electrode active material layer.

In some implementations, since the binder in the negative electrode active material layer and a part of the polymer are the same type of substances, by arranging the side of the separator provided with the polymer and the side of the negative electrode sheet provided with the negative electrode active material layer opposite to each other, the adhesion performance between the negative electrode sheet and the separator can be further improved after the two are in contact with each other.

Those skilled in the art may understand that, in the method of particular examples, a writing order of each step does not mean a strict execution order to constitute any limitation on an implementation process, and a detailed execution order of each step should be determined by its function and possible internal logic.

In a third aspect of the present application, the present application provides an electric device including the battery described above, and/or, the battery prepared by the method described above. Therefore, the electric device has all the features and advantages of the battery and the battery preparation method, which will not be repeated here.

The electric device includes at least one of the battery, the battery module, or the battery pack provided in the present application. The battery, the battery module, or the battery pack may be used as a power supply for the electric device, or as an energy storage unit for the electric device.

In some implementations, the electric device may include, but is not limited to, a mobile device (e.g., a cell phone or a notebook computer), an electric vehicle (with reference to FIG. 8, e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

The battery, the battery module, or the battery pack may be selected according to use requirements of the electric device.

The solutions of the present application are illustrated below through specific examples. It should be noted that these examples are provided solely for explaining the present application and should not be construed as limiting the scope of the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### 1. Preparation of a polymer

### (1) Preparation of a first polymer emulsion

According to a mass ratio of the first monomer, the second monomer and the third monomer of 100:25:20, the first monomer ethyl acrylate, the second monomer acrylonitrile and the third monomer acrylamide were respectively weighed to be 1000 g in total. The monomers were mixed uniformly. In a 5 L four flask equipped with a mechanical stirrer, a thermometer and a condenser tube, 1000 g of mixed monomers, 32 g of emulsifier sodium dodecyl benzene sulfonate, 10 g of initiator potassium persulfate and 1200 g of deionized water were added, and emulsified under high-speed stirring for 30 min. Under nitrogen protection, the temperature was raised to 80°C and the reaction was carried out for 4 h, then the temperature was lowered to below 40°C, the pH was adjusted to neutral, and the material was filtered out to obtain a first polymer emulsion.

### (2) Preparation of a second polymer emulsion

100 g of fourth monomers of butadiene and styrene with a mass ratio of 70:30 were weighed, 180 g of deionized water, 1.5 g of emulsifier sodium fatty acid, 0.06 g of initiator p-menthane hydroperoxide, and 0.02 g of electrolytic potassium chloride were added into a 1 L stainless-steel polymerization kettle, stirred for 20 min, 30 g of styrene monomers were added, the kettle lid was closed, nitrogen was introduced to replace the air in the kettle, then vacuumized, 70 g of butadiene was added in vacuo, the mixture was subjected to circulating cold bath, the polymerization temperature was controlled at 5°C, reacted for 5 h, stirring was discontinued, and the kettle was discharged to obtain the second polymer emulsion.

(3) The first polymer emulsion and the second polymer emulsion were weighed according to a weight ratio of the first polymer to the second polymer of 100:30, stirred and mixed uniformly, and then subjected to a spray drying process to obtain the binder for a separator, where the conditions of the spray drying process were an inlet air temperature of 110°C, an outlet air temperature of 50°C, and an air pressure of 0.5 kPa.

### 2. Preparation of a battery

### (1) Preparation of separator

A commercially available PE microporous film with a thickness of 7 µm and an average pore size of 80 nm (from Zhogao Electronic Technology Co., Ltd.) was used as the base membrane. The polymer prepared as above was stirred and mixed uniformly in deionized water to obtain a slurry (solid content of 20%). The slurry was sprayed onto both surfaces of the base membrane, and dried to remove the solvent, where the coating density of the polymer on the base membrane was 1.5 g/m², and the separator was obtained.

### (2) Preparation of positive electrode sheet

Polyvinylidene fluoride (PVDF), lithium iron phosphate (LFP), a conductive agent carbon black, and N-methylpyrrolidone (µMP) were mixed uniformly under stirring according to a mass ratio of 1.2:58.38:0.42:40 to prepare a positive electrode slurry. The positive electrode slurry was uniformly coated onto the aluminum foil current collector at a loading of 200 g/m². After procedures such as drying and cold pressing, the positive electrode sheet was obtained.

### (3) Preparation of a negative electrode sheet

Artificial graphite, a conductive agent of acetylene black, a binder of styrene-butadiene rubber (SBR), and a thickener of sodium carboxymethyl cellulose (CMC-Na) were added to deionized water at a mass ratio of 96.2:1.0:1.6:1.2 to obtain a cathode slurry, and after the solvent was fully stirred and uniformly mixed, a negative electrode slurry was manufactured (solid content of 63%). The negative electrode slurry was coated onto a copper foil as a negative electrode current collector at a loading of 98 g/m², dried, and cold pressed, and cut to obtain the negative electrode sheet.

### (4) Preparation of electrolyte solution

At 25°C, ethylene carbonate (EC), ethyl methyl carbonate (EMC), and diethyl carbonate (DEC) were mixed at a volume ratio of 1:1:1 to obtain a mixed solvent. Then, LiPF₆ was dissolved in the above mixed solvent to obtain an electrolyte solution, with the concentration of LiPF₆ being 1 mol/L.

### (5) Battery assembly

The above positive electrode sheet, separator, and negative electrode sheet were stacked in sequence, and wound and aged (during which the separator was bonded to the electrode sheet) to obtain a cell, the cell was placed in an outer package, the above prepared electrolyte was added, and after the procedures of packaging, standing, formation, cold press molding, etc., the battery was obtained.

Examples 2-24, Comparative Examples 1-3 differ from Example 1 in Tables 1-1 and 1-2, where Examples 15-20 differ from Example 1 in that a tackifying resin was added to the mixture of the first polymer emulsion and the second polymer emulsion before spray drying. Examples 21 and 22 differ from Example 1 in a mass ratio of the first polymer to the second polymer, and Examples 23 and 24 differ from Example 1 in that only the first monomer and the third monomer were used in Example 23, only the first monomer and the second monomer were used in Example 24, and the total mass of the monomers in Examples 23 and 24 was consistent with that in Example 1.

Comparative Example 1 differs from Example 1 in that polyacrylic acid was used as a binder when preparing the negative electrode slurry.

Comparative Example 2 differs from Example 1 in that only the first polymer emulsion was used for the preparation of the polymer.

Comparative Example 3 differs from Example 1 in that only the second polymer emulsion was used for polymer preparation.

**Table 1-1**

| No. | First monomer | Second monomer | Third monomer | Mass ratio of first monomer, second monomer, and third monomer | Types and mass ratios of the substances in the fourth monomer |
|---|---|---|---|---|---|
| Example 1 | Ethyl acrylate | Acrylonitrile | Propenamide | 100:25:20 | Butadiene:styrene = 70: 30 |
| Example 2 | Methyl acrylate | Acrylonitrile | Propenamide | 100:25:20 | Butadiene:styrene = 70: 30 |
| Example 3 | Ethyl acrylate | Methacrylonitrile | Propenamide | 100:25:20 | Butadiene:styrene = 70: 30 |
| Example 4 | Ethyl acrylate | Acrylonitrile | N-methylol acrylamide | 100:25:20 | Butadiene:styrene = 70: 30 |
| Example 5 | Ethyl acrylate | Acrylonitrile | Propenamide | 100:1:10 | Butadiene:styrene = 70: 30 |
| Example 6 | Ethyl acrylate | Acrylonitrile | Propenamide | 100:50:40 | Butadiene:styrene = 70: 30 |
| Example 7 | Ethyl acrylate | Acrylonitrile | Propenamide | 100:1:40 | Butadiene:styrene = 70: 30 |
| Example 8 | Ethyl acrylate | Acrylonitrile | Propenamide | 100:50:10 | Butadiene:styrene = 70: 30 |
| Example 9 | Ethyl acrylate | Acrylonitrile | Propenamide | 100:25:20 | Butadiene:acrylonitrile = 70: 30 |
| Example 10 | Ethyl acrylate | Acrylonitrile | Propenamide | 100:25:20 | Butadiene:isoprene = 70: 30 |
| Example 11 | Ethyl acrylate | Acrylonitrile | Propenamide | 100:25:20 | Butadiene: propylene = 70: 30 |
| Example 12 | Ethyl acrylate | Acrylonitrile | Propenamide | 100:25:20 | Butadiene:styrene = 70: 30 |
| Example 13 | Ethyl acrylate | Acrylonitrile | Propenamide | 100:25:20 | Butadiene:styrene = 70: 30 |
| Example 14 | Ethyl acrylate | Acrylonitrile | Propenamide | 100:25:20 | Butadiene:styrene = 70: 30 |
| Example 15 | Ethyl acrylate | Acrylonitrile | Propenamide | 100:25:20 | Butadiene:styrene = 70: 30 |
| Example 16 | Ethyl acrylate | Acrylonitrile | Propenamide | 100:25:20 | Butadiene:styrene = 70: 30 |
| Example 17 | Ethyl acrylate | Acrylonitrile | Propenamide | 100:25:20 | Butadiene:styrene = 70: 30 |
| Example 18 | Ethyl acrylate | Acrylonitrile | Propenamide | 100:25:20 | Butadiene:styrene = 70: 30 |
| Example 19 | Ethyl acrylate | Acrylonitrile | Propenamide | 100:25:20 | Butadiene:styrene = 70: 30 |
| Example 20 | Ethyl acrylate | Acrylonitrile | Propenamide | 100:25:20 | Butadiene:styrene = 70: 30 |
| Example 21 | Ethyl acrylate | Acrylonitrile | Propenamide | 100:25:20 | Butadiene:styrene = 70: 30 |
| Example 22 | Ethyl acrylate | Acrylonitrile | Propenamide | 100:25:20 | Butadiene:styrene = 70: 30 |
| Example 23 | Ethyl acrylate | / | Propenamide | 100:0:40 | Butadiene:styrene = 70: 30 |
| Example 24 | Ethyl acrylate | Acrylonitrile | / | 100:50:0 | Butadiene:styrene = 70: 30 |
| Comparative Example 1 | Ethyl acrylate | Acrylonitrile | Propenamide | 100:25:20 | Butadiene:styrene = 70: 30 |
| Comparative Example 2 | / | / | / | / | Butadiene:styrene = 70: 30 |
| Comparative Example 3 | Ethyl acrylate | Acrylonitrile | Propenamide | 100:25:20 | / |

**Table 1-2**

| No. | Tackifying resin | | m₁:m₃ | m₁:m₂ | Binder in a negative electrode active material layer |
|---|---|---|---|---|---|
| | Substance | Number-average molecular weight | | | |
| Example 1 | / | / | / | 100:30 | Styrene butadiene copolymer |
| Example 2 | / | / | / | 100:30 | Styrene butadiene copolymer |
| Example 3 | / | / | / | 100:30 | Styrene butadiene copolymer |
| Example 4 | / | / | / | 100:30 | Styrene butadiene copolymer |
| Example 5 | / | / | / | 100:30 | Styrene butadiene copolymer |
| Example 6 | / | / | / | 100:30 | Styrene butadiene copolymer |
| Example 7 | / | / | / | 100:30 | Styrene butadiene copolymer |
| Example 8 | / | / | / | 100:30 | Styrene butadiene copolymer |
| Example 9 | / | / | / | 100:30 | Styrene butadiene copolymer |
| Example 10 | / | / | / | 100:30 | Styrene butadiene copolymer |
| Example 11 | / | / | / | 100:30 | Styrene butadiene copolymer |
| Example 12 | / | / | / | 100:1 | Styrene butadiene copolymer |
| Example 13 | / | / | / | 100:50 | Styrene butadiene copolymer |
| Example 14 | / | / | / | 100:100 | Styrene butadiene copolymer |
| Example 15 | Esterified rosin | 8000 | 100:1 | 100:30 | Styrene butadiene copolymer |
| Example 16 | Terpene phenolic resin | 10000 | 100:1 | 100:30 | Styrene butadiene copolymer |
| Example 17 | Esterified rosin | 8000 | 100:10 | 100:30 | Styrene butadiene copolymer |
| Example 18 | Esterified rosin | 8000 | 100:15 | 100:30 | Styrene butadiene copolymer |
| Example 19 | Esterified rosin | 8000 | 100:5 | 100:30 | Acrylonitrile butadiene copolymer |
| Example 20 | Esterified rosin | 8000 | 100:5 | 100:30 | Butadiene-isoprene copolymer |
| Example 21 | / | / | / | 100:0.5 | Styrene butadiene copolymer |
| Example 22 | / | / | / | 100:105 | Styrene butadiene copolymer |
| Example 23 | / | / | / | 100:30 | Styrene butadiene copolymer |
| Example 24 | / | / | / | 100:30 | Styrene butadiene copolymer |
| Comparative Example 1 | / | / | / | 100:30 | Polyacrylic acid |
| Comparative Example 2 | / | / | / | / | Styrene butadiene copolymer |
| Comparative Example 3 | / | / | / | / | Styrene butadiene copolymer |

The separators, the positive electrode sheets and the negative electrode sheets in Examples 1-24 and Comparative Examples 1-3 were tested for adhesion force, the test results were as shown in Table 2, and the test conditions were as follows:

The electrode sheet and the separator may be overlapped together and placed on a hot press machine, the hot press machine is set to have parameters of a temperature of 25°C, a pressure of 7 t, and a time of 15 s, and the separator/electrode sheet sample bonded is obtained by pressing, and the separator/electrode sheet sample is cut into a rectangular strip of 150 mm × 20 mm. The rectangular strip is adhered to a steel plate via double-sided tape with the electrode sheet side facing outward. A 2 cm length of the separator is peeled away from the electrode sheet along the longitudinal direction at one end of the rectangular strip to prepare the test sample. The steel plate is maintained horizontally and secured by the lower fixture of a universal testing machine (Xieqiang Instrument Manufacturing (Shanghai) Co., Ltd., Model CTM2100). The peeled end of the above-mentioned separator is clamped by the upper fixture of the universal testing machine and connected to the tensile tester. The test is performed at a tensile speed of 20 mm/min with a horizontal pulling distance of 10 cm. After the tensile force stabilizes, the force value is recorded. The adhesion force between the separator and the electrode sheet is obtained by dividing the tensile force value by the sample width.

Cycle performance tests were conducted on the batteries of Examples 1-24 and Comparative Examples 1-3. The test results are shown in Table 2, under the following test conditions:

At 25°C, the prepared battery was charged at a constant current of 1/3 C to 3.65 V, then charged at a constant voltage of 3.65 V until the current reached 0.05 C. After resting for 5 minutes, the battery was discharged at 1/3 C to 2.5 V. The obtained discharge capacity was recorded as the initial capacity (Co). The same battery was subjected to repeated cycles following the above procedure, while recording the discharge capacity (Cₙ) after the n^{th} cycle. The capacity retention rate (Pₙ) after each cycle was calculated as Pₙ = (Cₙ/Cₒ) × 100%. The differences in cycle performance were thus characterized by the battery capacity retention rate after 500 cycles.

**Table 2**

| No. | Adhesion force a/N between the separator and the positive electrode sheet | Adhesion force b/N between the separator and the negative electrode sheet | a:b | P₅₀₀/% |
|---|---|---|---|---|
| Example 1 | 14.5 | 8.6 | 1.7 | 94.5 |
| Example 2 | 13.9 | 9.8 | 1.4 | 93.8 |
| Example 3 | 15.3 | 8.5 | 1.8 | 94.2 |
| Example 4 | 13.6 | 8.4 | 1.6 | 94.3 |
| Example 5 | 12.2 | 5.3 | 2.3 | 93.2 |
| Example 6 | 15.5 | 5.0 | 3.1 | 93.5 |
| Example 7 | 10.2 | 6.5 | 1.6 | 94.0 |
| Example 8 | 12.5 | 4.8 | 2.6 | 93.2 |
| Example 9 | 14.6 | 9.2 | 1.6 | 94.2 |
| Example 10 | 13.8 | 9.6 | 1.4 | 94.6 |
| Example 11 | 12.6 | 7.6 | 1.7 | 93.8 |
| Example 12 | 13.1 | 4.2 | 3.1 | 92.4 |
| Example 13 | 13.8 | 8.9 | 1.6 | 92.9 |
| Example 14 | 14.2 | 10.5 | 1.4 | 93.0 |
| Example 15 | 15.2 | 9.9 | 1.5 | 94.7 |
| Example 16 | 15.1 | 10.2 | 1.5 | 94.6 |
| Example 17 | 15.5 | 10.6 | 1.5 | 94.8 |
| Example 18 | 15.8 | 10.3 | 1.5 | 94.5 |
| Example 19 | 13.5 | 7.3 | 1.8 | 93.2 |
| Example 20 | 13.3 | 8.4 | 1.6 | 91.8 |
| Example 21 | 8.3 | 4.3 | 2.6 | 89.2 |
| Example 22 | 7.5 | 3.6 | 2.1 | 87.9 |
| Example 23 | 6.0 | 3.5 | 1.6 | 87.6 |
| Example 24 | 6.9 | 3.2 | 1.4 | 87.2 |
| Comparative Example 1 | 5.8 | 2.6 | 2.3 | 86.4 |
| Comparative Example 2 | 3.2 | 2.7 | 0.7 | 86.4 |
| Comparative Example 3 | 5.6 | 2.1 | 2.7 | 86.6 |

Examples 1-24: through optimization of the polymer composition in the adhesive coating on the separator, the separator achieves better adhesion to the electrode sheets while simultaneously improving the adhesion performance between the separator and negative electrode sheet by matching the polymers with the binder in the negative electrode active material layer, resulting in excellent and balanced adhesion forces between the separator and both positive and negative electrode sheets with minimal force disparity, thereby effectively mitigating poor lamination between the negative electrode sheet and separator, enabling mutual adhesion and structural support among the positive electrode sheet, negative electrode sheet and separator, enhancing electrolyte wettability of the electrode sheets, maintaining low battery internal resistance, effectively suppressing volume expansion of the negative electrode sheet during lithium deintercalation and intercalation, and significantly improving battery cycle performance.

Comparative Example 1: due to the absence of butadiene copolymer in the binder used for the negative electrode active material layer, the bonding strength between the second polymer and the binder in the negative electrode active material layer cannot be enhanced, resulting in insufficient adhesion force between the negative electrode active material layer and the separator, failure to effectively suppress volume expansion of the negative electrode sheet during lithium deintercalation and intercalation, poor electrolyte wettability of the electrode sheets, and poor battery cycle performance.

Comparative Example 2: although the polymer coating on the base membrane surface lacks the first polymer and shows minimal disparity in adhesion force among the separator and both positive and negative electrode sheets, the adhesion forces among them remain inadequate in all cases, the positive electrode sheet, the negative electrode sheet and the separator cannot be attached to each other and support each other, resulting in the battery being loose, the hardness becoming lower, the internal resistance of the battery being significantly increased, and the wettability of the electrode sheet to the electrolyte being poor, which in turn results in cycle performance of the battery being reduced.

Comparative Example 3: due to the absence of the second polymer in the base membrane surface coating, the adhesion force between the polymer and the butadiene copolymer in the negative electrode active material layer cannot be enhanced, resulting in insufficient adhesion force between the negative electrode active material layer and the separator, failure to effectively suppress volume expansion of the negative electrode sheet during lithium deintercalation and intercalation, poor electrolyte wettability of the electrode sheets, and poor battery cycle performance.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A battery, comprising:
a negative electrode sheet comprising a negative electrode current collector and a negative electrode active material layer located on at least one side of the negative electrode current collector, the negative electrode active material layer comprising a binder, and the binder comprising a butadiene copolymer; and
a separator comprising a base membrane and a polymer located on at least one side of the base membrane, the side of the separator provided with the polymer being arranged opposite to the side of the negative electrode sheet provided with the negative electrode active material layer,
the polymer comprising a first polymer and a second polymer, the first polymer comprising an acrylate copolymer, and the second polymer comprising a butadiene copolymer.

2. The battery according to claim 1, wherein a monomer of the first polymer and a derivative of the monomer of the first polymer comprise at least a first monomer, and a structure of the first monomer is represented by Formula 1: 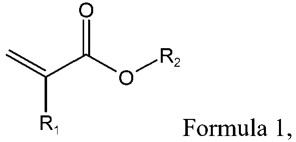 wherein R₁ comprises a hydrogen atom or an alkyl of C₁-C₆, R₂ comprises a substituted or unsubstituted alkyl of C₁-C₁₅, a substituted or unsubstituted isobornyl of C₃-C₆, wherein a substituent of the alkyl of C₁-C₁₅ comprises a hydroxyl or the alkyl of C₁-C₆.

3. The battery according to claim 2, wherein the first monomer comprises at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trimethylolpropane triacrylate, 2-hydroxyethyl acrylate, 2-hydroxypropyl acrylate, 2-hydroxyethyl methacrylate, and 2-hydroxypropyl methacrylate.

4. The battery according to any one of claims 1 to 3, wherein the monomer of the first polymer and the derivative of the monomer of the first polymer further comprise a second monomer, and a structure of the second monomer is represented by Formula 2 and/or Formula 3: 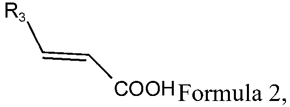 and/or, 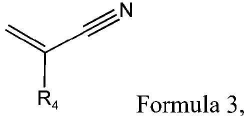 wherein R₃ comprises the hydrogen atom or the alkyl of C₁ -C₁₈, and R₄ comprises the hydrogen atom or the alkyl of C₁ -C₆.

5. The battery according to claim 4, wherein the second monomer comprises at least one of acrylonitrile, methacrylonitrile, ethylacrylonitrile, acrylic acid, methacrylic acid, crotonic acid, and heptenoic acid.

6. The battery according to any one of claims 1 to 5, wherein the monomer of the first polymer and the derivative of the monomer of the first polymer further comprise a third monomer, and a structure of the third monomer is represented by Formula 4: 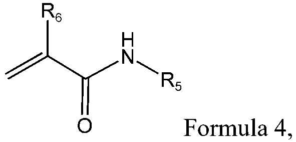 wherein R₅ comprises the hydrogen atom, a hydroxyl substituted alkyl of C₁-C₆ or an alkoxy of C₁-C₆, and R₆ comprises the hydrogen atom or the alkyl of C₁-C₆.

7. The battery according to claim 6, wherein the third monomer comprises at least one of acrylamide, N-hydroxymethylacrylamide, and N-butoxymethylacrylamide.

8. The battery according to any one of claims 1 to 7, wherein a monomer of the second polymer and a derivative of the monomer of the second polymer comprise at least a fourth monomer, and a structure of the fourth monomer is represented by Formula 5: 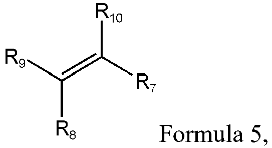 wherein R₇, R₈, R₉, and R₁₀ each independently comprise the hydrogen atom, a phenyl, an alkenyl, a cyano, and a linear or branched alkyl.

9. The battery according to claim 8, wherein the fourth monomer comprises butadiene, and further comprises at least one of styrene, acrylonitrile, isoprene, and propylene.

10. The battery according to claim 8 or 9, wherein the second polymer comprises at least one of styrene-butadiene copolymer, acrylonitrile-butadiene copolymer, butadiene-isoprene copolymer, and butadiene-propylene copolymer.

11. The battery according to any one of claims 1 to 10, wherein the Dv50 particle size of primary particles of the first polymer is from 100 nm to 200 nm, and/or the Dv50 particle size of primary particles of the second polymer is from 100 nm to 200 nm.

12. The battery according to any one of claims 1 to 11, wherein the Dv50 particle size of the polymer is from 1 µm to 18 µm.

13. The battery according to any one of claims 1 to 12, wherein a mass of the first polymer in the polymer is m₁, a mass of the second polymer in the polymer is m₂, and m₁:m₂ is 100:(1-100).

14. The battery according to claim 13, further comprising a tackifying resin, wherein a mass of the tackifying resin in the polymer is m₃, and m₁:m₃ is 100:(1-15).

15. The battery according to claim 14, wherein the tackifying resin satisfies at least one of the following conditions:
the tackifying resin comprises at least one of rosin resin, terpene resin, and synthetic resin;
and the tackifying resin has a number-average molecular weight of 5,000 to 50,000.

16. The battery according to any one of claims 1 to 15, wherein the polymer further comprises a positive electrode sheet, the separator is located between the positive electrode sheet and the negative electrode sheet, an adhesion force between the separator and the positive electrode sheet is a, the adhesion force between the separator and the negative electrode sheet is b, and (a:b) ≤ (5:1),
preferably, (a:b) ≤ (2:1).

17. A battery preparation method according to any one of claims 1 to 16, comprising:
mixing an emulsifier, an initiator, and constituent monomers of a first polymer at a mass ratio of (2-10):(0.2-1): 100 under stirring, and heating to react to obtain a first polymer emulsion;
mixing the emulsifier, the initiator, and the constituent monomers of a second polymer at the mass ratio of (2-10):(0.2-1): 100 under stirring to obtain a second polymer emulsion;
mixing the first polymer emulsion and the second polymer emulsion under stirring, and subjecting the mixture to spray drying to obtain the polymer;
arranging the polymer on at least one side of a base membrane to obtain a separator; and
arranging the side of the separator provided with the polymer opposite to the side of the negative electrode sheet provided with the negative electrode active material layer.

18. The method according to claim 17, wherein the constituent monomers of the first polymer comprise a first monomer, a second monomer, and a third monomer, wherein the mass ratio of the first monomer, the second monomer, and the third monomer is 100:(1-50):(10-40).

19. The method according to claim 17 or 18, wherein the constituent monomers of the second polymer comprise a fourth monomer.

20. The method according to any one of claims 17 to 19, wherein the second polymer emulsion satisfies at least one of the following conditions:
a solid content of the second polymer emulsion is from 30% to 60%;
and the viscosity of the second polymer emulsion at 25°C is from 10 mPa·s to 300 mPa·s.

21. The method according to any one of claims 17 to 20, further comprising, before the spray drying: adding the tackifying resin to the spray slurry, wherein the mass fraction of the tackifying resin in a spray slurry is from 1% to 20%.

22. The method according to claim 21, wherein a viscosity of the tackifying resin at 25°C is from 100 mPa·s to 5000 mPa.s.

23. An electric device, comprising the battery according to any one of claims 1 to 16, and/or the battery prepared by the method according to any one of claims 17 to 22.
